# EUROPÄISCHE PATENTSCHRIFT

(11) **EP 2 208 641 B1**
(45) Veröffentlichungstag und Bekanntmachung des Hinweises auf die Patenterteilung: **02.11.2011**
(21) Anmeldenummer: 09075019.1
(22) Anmeldetag: 14.01.2009
(51) Int. Cl.: B60R 1/072, B60R 1/066, B60H 1/34

(54) **Antrieb für ein zu verstellendes Bauteil**
Drive for a component to be adjusted
Entraînement pour un composant qui est à ajuster

(43) Veröffentlichungstag der Anmeldung: 21.07.2010
(73) Patentinhaber: Magna Auteca AG, 8160 Krottendorf/Weiz (AT)
(72) Erfinder: Schadler, Bernhardt, A-8261 Sinabelkirchen (AT); Dornhofer, Hermann, A-8190 Birkfeld (AT)
(74) Vertreter: Pfenning, Meinig & Partner GbR

(56) Entgegenhaltungen:
- WO-A-98/31565
- WO-A-03/054401
- DE-A1- 19 902 757

## Beschreibung

Die Erfindung betrifft einen Antrieb für ein zu verstellendes Bauteil, insbesondere für einen verstellbaren Kraftfahrzeugspiegel nach dem Oberbegriff des Hauptanspruchs.

Es ist eine Vielzahl von Antrieben für ein zu verstellendes Bauteil, insbesondere für den Kraftfahrzeugbereich, bekannt, wobei die relativ zu einer feststehenden Struktur zu verstellenden Bauteile Spiegel, Klappen für Lüftungen und Heizungen oder dergleichen sind.

Eine Antriebsvorrichtung für einen verstellbaren Rückblickspiegel ist beispielsweise aus der WO 98/31565 bekannt. Dabei ist ein fahrzeugfestes Antriebsgehäuse in Schalenform und aus Kunststoff vorgesehen, das Motoren und Getriebeelemente, wie Zahnräder oder Schnecken, aufnimmt. Das Gehäuse bildet mit seiner Außenfläche eine sphärische Führungsfläche für ein das Gehäuse umgreifende Außenschale, die mit einem Spiegelträger verbunden ist, der zur Verstellung des Rückblickspiegels um zwei gedachte Achsen schwenkbar ist und an dem ein Spiegelglas befestigt ist. In der das Gehäuse umgreifenden Außenschale ist mindestens eine Verzahnung, vorzugsweise zwei Verzahnungen vorgesehen, wobei von Elektromotoren über Getriebeelemente angetriebene Zahnräder das Gehäuse durchgreifen und zur Verstellung der mit dem Spiegelträger verbundenen umgreifenden Außenschale mit deren Verzahnungen in Eingriff treten. Die Trägerplatte ist über eine mittige Schraube, die das Gehäuse durchgreift und in einen Gewindeansatz der Außenschale eingeschraubt ist, mit letzterer verbunden. Das Gehäuse weist seitliche Befestigungsansätze für den Durchgriff von Schrauben auf, die zur Befestigung an der feststehenden Struktur dienen. Die Außenschale ist mit entsprechenden Öffnungen versehen.

Im Stand der Technik wurde auch versucht, Antriebe mit nur einer Schraube an der feststehenden Struktur zu befestigen. Hier wurde jedoch die Schraube durch Kriechverhalten des Kunststoffes locker, wodurch der Antrieb taumeln kann.

Ausgehend von dem bekannten Stand der Technik liegt der Erfindung die Aufgabe zugrunde, einen Antrieb für ein zu verstellendes Bauteil, insbesondere für einen verstellbaren Kraftfahrzeugspiegel zu schaffen, der eine sichere Befestigung und Abstützung an der feststehenden Struktur über die gesamte Lebensdauer des Antriebselements sicherstellt, wobei dafür vorgesehene Mittel konstruktiv einfach und leicht zu installieren sein sollen.

Diese Aufgabe wird erfindungsgemäß durch die kennzeichnenden Merkmale des Hauptanspruchs in Verbindung mit den Merkmalen des Oberbegriffs gelöst.

Durch die in den Unteransprüchen angegebenen Maßnahmen sind vorteilhafte weiterbildungen und Verbesserungen möglich.

Dadurch, dass um die Mittelachse herum eine stiftartige Hülse, die zur Durchführung eines Befestigungselements im Gehäuse angeordnet ist, die einen tellerartigen Ansatz zur Abstützung am Boden des Gehäuses aufweist, wobei der tellerfederartige Ansatz ein Mittel zur gleichmäßigen Verteilung der von dem Befestigungselement zur Befestigung an der feststehenden Struktur hervorgerufenen Verspannkraft bildet, wird die nach dem Verschrauben des Antriebs mit der feststehenden Struktur entstehende Verspannkraft auf die Innenseite bzw. den Boden des Gehäuses verteilt und damit auf die Auflagepunkte. Dadurch wird eine sichere und gleichmäßige Abstützung des Antriebs über die Lebensdauer erreicht.

In einem bevorzugten Ausführungsbeispiel besteht das Gehäuse aus einem schalenförmigen Untergehäuse, dessen Außenfläche die Kontaktfläche mit dem ringförmigen, eine Teilschale bildenden, umgreifenden Element darstellt, und einem deckelartigen Obergehäuse mit einer Öffnung für den Durchgriff des zu dem tellerförmigen Ansatz entgegen gesetzten Endes der Hülse. Dadurch wird eine einfache Konstruktion zur Verfügung gestellt.

Dadurch, dass vorteilhafterweise am Boden des Gehäuses eine ins Innere desselben weisende Erhöhung angeformt ist, die von dem tellerfederartigen Ansatz übergriffen wird, wird letzterer zusätzlich fixiert und die unter dem Ansatz ohne die Erhöhung vorhandene Luft wird zusätzlich eliminiert, wodurch die Krafteinleitung in den Boden und in mindestens drei Auflageansätze als Abstützpunkte an der feststehenden Struktur verbessert wird.

In einem bevorzugten Ausführungsbeispiel ist mindestens ein am Obergehäuse angeformter Ansatz vorgesehen, der zur Verbesserung der Positionierung einen Anschlag zum Niederhalten des tellerfederartigen Ansatzes bildet.

Vorteilhafterweise sind um die Hülse herum Mittel zur elastischen Vorspannung zwischen Gehäuse und umgreifendem Element vorgesehen, die ein über eine Öffnung um die Hülse herum angeordnetes Ausgleichselement aufweisen, wobei das Ausgleichselement unter der Wirkung von einer Federkraft axial zur Ausübung eines Drucks auf den Träger und damit auf das das Gehäuse umgreifende Element bewegbar ist, wodurch ein konstantes Reibmoment über die Lebensdauer des Antriebs zur Verfügung gestellt werden kann, da das durch eine mögliche Relaxation des Kunststoffs auftretende Spiel durch Verschiebung des Ausgleichselements und damit durch axiale Verschiebung des Trägers zusammen mit dem umgreifenden Element ausgeglichen wird. Da die Federkraft axial wirkt, ergibt sich eine definierte und gleichmäßige Reibung zwischen Gehäuse und übergreifendem Element.

Zur Ausübung der Federkraft ist vorteilhafterweise zwischen Ausgleichselement und Gehäuse mindestens eine axial zur Mittelachse des Gehäuses wirkende Feder angeordnet, vorzugsweise sind zwei Federn vorgesehen, die wiederum bevorzugt als Spiralfedern ausgebildet sind. Es kann aber auch nur eine Spiralfeder koaxial zur Hülse angeordnet sein. Durch eine derartige Anordnung kann die axiale Kraft, die das umgreifende Element mit dem Spiegelträger in der Zeichnung gesehen nach oben drückt, in einfacher Weise erzeugt werden.

In einem bevorzugten Ausführungsbeispiel sind die Federn, vorzugsweise die Spiralfedern symmetrisch zur Mittelachse angeordnet und ebenfalls vorzugsweise sind an dem Ausgleichselement Stifte für die Zentrierung der Federn angeformt. Durch diese Mittel werden einerseits die Kräfte gleichmäßig auf die Ausgleichsplatte gerichtet und die Federn werden sauber axial geführt, so dass keine Verkantung zwischen dem Gehäuse und dem umgreifenden Element auftreten und die definierte Reibung zwischen den besagten Teilen gewährleistet.

Das Ausgleichselement kann plattenförmig ausgebildet sein, mit den angeformten Stiften zur Zentrierung der Federn, wobei vorzugsweise das plattenförmige Element gekrümmt ist oder zwei prismaähnliche Flächen aufweist. Diese Ausführung ist besonders vorteilhaft, da das Ausgleichselement Bestandteil, d.h. ein Lagerelement einer doppelten Zylinder-Drehlageranordnung zum Verschwenken des Trägers und des umgreifenden Elementes ist. Dazu weist der als Platte ausgebildete Träger mittig einen angeformten Teilzylinder auf, wobei zwischen Teilzylinder des Trägers und dem Ausgleichselement ein weiteres Lagerelement angeordnet ist, dessen dem Teilzylinder zugewandte Lagerfläche für denselben zwei prismaähliche Flächen oder eine gekrümmte Fläche umfasst und dessen dem Ausgleichselement zugewandte Fläche als teilzylinderförmige Gleitfläche ausgebildet ist.

Auf diese Weise wird in einem Ausführungsbeispiel eine doppelte Zylinder-Prismaführung gebildet, bei der die jeweiligen teilzylindrischen Flächen der Trägerplatte und des weiteren Lagerelements auf den prismatischen Flächen eine linienförmige Abstützung haben.

Insgesamt ergibt sich ein Toleranzausgleich in der verdrehsicheren Lagerung und es wird möglich, fertigungsbedingte Mittigkeitsfehler auszugleichen. Dadurch entsteht ein gleichmäßiger Kontakt zwischen der Außenfläche des Gehäuses und der Innenfläche des umgreifenden Elements.

Ein Ausführungsbeispiel der Erfindung ist in der Zeichnung dargestellt und wird in der nachfolgenden Beschreibung näher erläutert. Es zeigen
- Fig. 1: einen Schnitt durch den erfindungsgemäßen Antrieb und
- Fig. 2: eine schematische Darstellung der bei dem erfindungsgemäßen Ausführungsbeispiel ver- wendeten Drehlagerung mit Verdrehsicherung und doppelter Zylinder-Prismaführung.

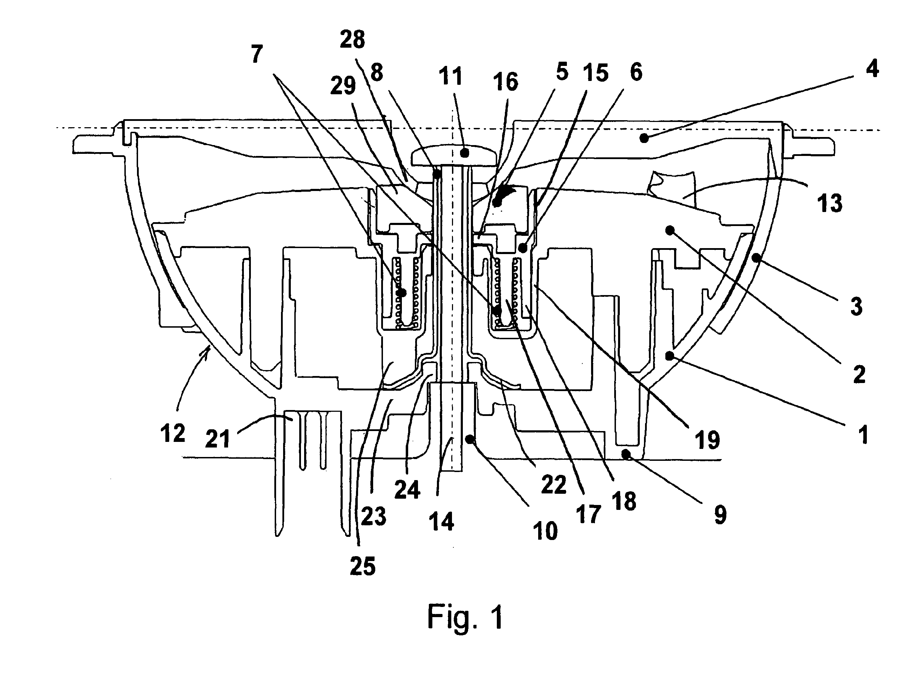

Der in Fig. 1 dargestellte Antrieb entsprechend der Erfindung weist ein schalenförmiges Untergehäuse 1 und ein mit dem Untergehäuse 1 beispielsweise über Rast- und/oder Clipverbindungen verbundenes Obergehäuse auf, das das Untergehäuse deckelartig abschließt. In dem so gebildeten Gehäuse 12 sind Antriebselemente untergebracht, wie z.B. Elektromotoren, Getriebeschnecken und Zahnräder.

Das schalenförmige Gehäuse 12 aus Untergehäuse 1 und Obergehäuse 2 wird von einer ringförmigen Antriebsschale 3 übergriffen, die mit einer Trägerplatte 4 verbunden ist, wobei die Verbindungen wiederum Rast- und Schnappverbindungen sein können. Unter ringförmiger Antriebsschale wird verstanden, dass das Untergehäuse 1 nur bereichsweise übergriffen wird, wie aus Fig. 1 gut zu erkennen ist. Die Innenfläche der Antriebsschale 3 gleitet auf der Außenfläche des schalenförmigen Untergehäuses 1, wodurch die Trägerplatte 4 geschwenkt wird. An der Träger- oder Adapterplatte 4 wird im bevorzugten Ausführungsbeispiel ein Spiegelelement eines Rückblickspiegels für Kraftfahrzeuge befestigt.

Auf der Innenseite der Antriebsschale 3 ist im dargestellten Ausführungsbeispiele eine Verzahnung 13 angedeutet, die mit einem nicht dargestellten Antriebszahnrad in Eingriff steht, das das Untergehäuse 1 durchgreift und über Getriebeelemente von einem Elektromotor (nicht dargestellt) angetrieben wird. Eine weitere Verzahnung 13 ist etwa 90° zu der dargestellten Verzahnung 13 angeordnet und steht mit einem nicht dargestellten weiteren Antriebszahnrad in Verbindung. Dadurch lässt sich die Trägerplatte 4 in alle Richtungen schwenken.

In dem Obergehäuse 2 ist um eine Mittelachse 14 des Antriebs herum eine Vertiefung 15 mit Hohlansätzen vorgesehen, in die ein weiter unten beschriebenes Ausgleichselement 6 eingesetzt ist. Weiterhin ist zwischen Gehäuse 12 und Träger 4 eine Lageranordnung 5 eingesetzt, die ein Verschwenken des Trägers mit Antriebsschale 3 gestattet.

Wie in Fig. 1 zu erkennen ist, wird der Antrieb an einer feststehenden Struktur 10, beispielsweise einem mit dem Kraftfahrzeug verbundenen Teil eines Spiegelträgerteils, befestigt, wobei eine Steckbuchse 21 des Antriebs mit einem entsprechenden Stecker einer e-lelarischen Leitung verbunden wird. Üblicherweise wird der Antrieb mittels einer Befestigungsschraube 11 mit der feststehenden Struktur 10 verschraubt, derart, dass das Untergehäuse 1 mit durch Ansätzen 9 vorgegebenen Auflagepunkten sich an der feststehenden Struktur 10 abstützt. Um eine sichere Abstützung des Antriebs über die gesamte Lebensdauer zu erreichen, ist, wie aus Fig. 1 zu erkennen ist, eine Hülse 8 in dem Gehäuse 12 um die Mittelachse 14 herum aufgenommen. Die Hülse 8 weist an einem Ende einen tellerfederartigen Ansatz 22 auf, der sich am Boden 23 des Untergehäuses 1 abstützt, wobei dieser Boden 23 eine nach innen gezogene Erhöhung 24 aufweist, die in den tellerfederartigen Ansatz 22 eingreift. Eine Verlängerung 25 des Hohlansatzes 19 drückt dabei von oben (entsprechend Fig. 1) auf den Teller 22. Die Hülse 8 durchgreift die Teile der Lagerung 5 und ragt in eine Vertiefung der Trägerplatte 4 hinein, die ausgebildet ist, um das Schwenken der Trägerplatte 4 zusammen mit der Antriebsschale 3 zuzulassen. Zum Einschrauben der Befestigungsschraube 11 in die feststehende Struktur 10 wird die Schraube 11 durch die Hülse 8 geführt und beim Festziehen wird der tellerförmige Ansatz gegen den Boden 23 und die Erhöhung 24 gedrückt, so dass im Wesentlichen die Luft zwischen diesen Teilen eliminiert und der Boden unter Spannung gehalten wird. Dadurch wird die Vorspannkraft auf die Auflageansätze 9 verteilt, so dass die Schraube sich auch über die Lebensdauer nicht lockern kann und der Antrieb fest auf der feststehenden Struktur sitzt.

Das in die Vertiefung 15 des Obergehäuses 2 eingesetztes Ausgleichselement 6 umfasst ein plattenförmiges Teil 16, an das zwei in die Vertiefung 15 hineinragende Stifte 17 und zwei Führungen 18 angeformt sind. Das plattenförmige Oberteil 16 und auch die Vertiefung 15 haben einen viereckigen Umriss. Die Vertiefung 15 setzt sich in den angeformten Hohlansätzen 19 fort, die zur Aufnahme der Stifte 17 und der Führungen 18 dienen. Zwischen dem Boden dieser Hohlansätze 19 und dem plattenförmigen Oberteil 16 des Ausgleichselements 6 sind um die Stifte 17 herum Spiralfedern 7 unter Vorspannung eingesetzt. Diese Federn 7 drücken somit das Ausgleichselement 6 in der Fig. 1 nach oben.

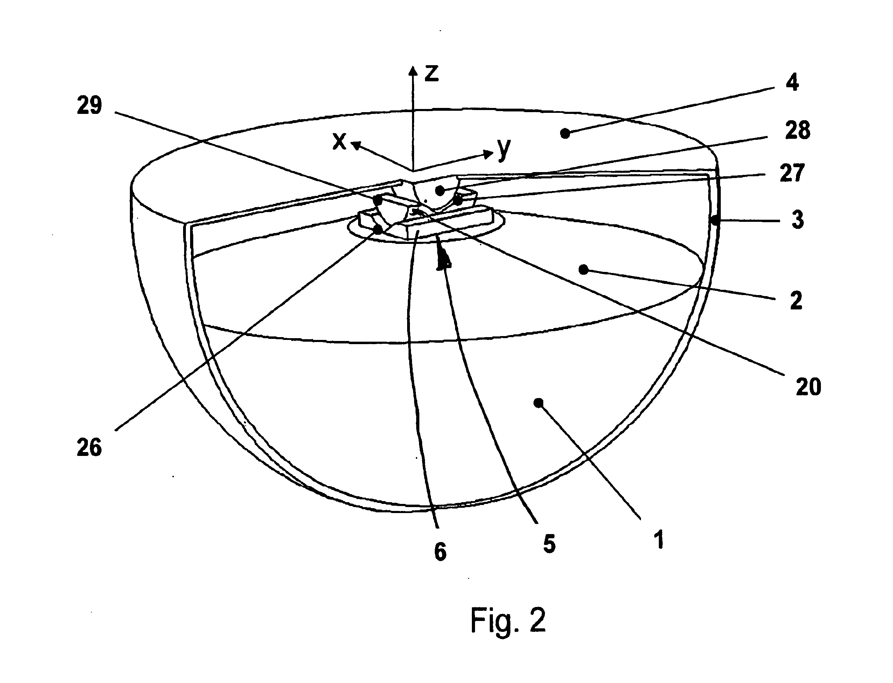

Die Drehachse des Antriebs, beispielsweise eines Spiegelverstellantriebs, wird durch die Teilkugelfläche an der Antriebsschale 3 und durch die Kugelfläche am Untergehäuse bestimmt. Dabei schwenkt die Antriebsschale 3 mit Trägerplatte 4 um eine Lagerung 5 mit Verdrehsicherung, die mit Hilfe von Fig. 2 näher erläutert wird. In dieser Fig. 2 sind das Untergehäuse 1 und das Obergehäuse 2 sowie die Antriebsschale 3 mit der Trägerplatte 4 schematisch dargestellt und dienen in dieser Form der Erläuterung der Lagerung 5. Ein Koordinatensystem ist in bekannter Weise mit x, y und z bezeichnet. Das Ausgleichselement 6, von dem hier schematisch ein Teil des Oberteils zu sehen ist, weist eine Prismaführung 26 aus zwei schrägen Flächen auf, auf denen ein Verdrehsicherungselement oder Zwischenelement 20 aufliegt. Dieses Zwischenelement 20 ist auf der dem Ausgleichselement 6 zugewandten Seite mit einer Teilzylinderfläche 29 versehen, die auch in einzelnen Kufen, wie in Fig. 1 dargestellt, ausgebildet sein kann. An der Trägerplatte 4 ist gleichfalls ein Teilzylinder 28 angeformt, wie er im Schnitt auch in Fig. 1 zu erkennen ist. Dieser Teilzylinder 28 wird von dem Zwischenelement 20 aufgenommen, das auf der dem Teilzylinder 28 zugewandten Seite eine Führung, im vorliegenden Fall eine Prismaführung 27, bestehend aus zwei Schrägen, aufweist. Aufgrund dieser Anordnung der Lagerung können bei fertigungsbedingten Mittigkeitsfehlern, d.h. bei einer Nichtzentrizität, das Zwischenlagerelement 20 eine lineare Bewegung in y-Richtung vornehmen und der Zylinder 28 in der Prismenführung 27 eine lineare Bewegung in x-Richtung ausführen. Auf diese Weise findet ein Toleranzausgleich statt. Durch die doppelte Zylinder-Prismaführung 26, 27, 28, 29 findet beim Schwenken der Antriebsschale 3 und der Trägerplatte 4 um die x-Achse und die y-Achse jeweils eine Linienberührung zwischen den schrägen Flächen der Prismenführungen 26 und 27 und den zugeordneten Teilzylindern 28 und 29 statt.

Wenn im Laufe der Lebensdauer des Antriebs der Kunststoff einer Relaxation unterliegt, durch die ein Spiel zwischen dem Untergehäuse 1, d.h. zwischen seiner äußeren Kugelfläche und der Antriebsschale 3, d.h. ihrer inneren Kugelfläche, auftreten könnte, drücken die Spiralfedern 7 das Ausgleichselement 6 in der Fig. 1 nach oben, wodurch auch die Teile der Lagerung 5 und damit die Trägerplatte 4 zusammen mit der Antriebsschale nach oben gedrückt werden, so dass die Antriebsschale 3 immer an dem Untergehäuse 1 anliegt und sich eine definierte Reibung zwischen Untergehäuse 1 und Antriebsschale 3 ergibt. Durch die axiale Federkraft der Spiralfedern 7 und dem Ausgleichselement 6 wird somit die Antriebsschale 3 gleichmäßig über den gesamten Umfang gegen das untere Gehäuse 1 spielfrei gehalten.

## Patentansprüche

1. Antrieb für ein zu verstellendes Bauteil, insbesondere für einen verstellbaren Kraftfahrzeugspiegel, mit einem an einer feststehenden Struktur (10) befestigbaren, eine Mittelachse aufweisenden Gehäuse (12) zur Aufnahme von Antriebselementen und mit einem das Gehäuse (12) zumindest teilweise umgreifenden Element (3), das mit einem Träger (4) für das Bauteil verbunden ist, wobei das umgreifende Element (3) mit dem Träger (4) relativ zu dem Gehäuse (12) schwenkbar angeordnet ist,
**dadurch gekennzeichnet, dass** um die Mittelachse (14) herum eine stiftartige Hülse (8) zur Durchführung eines Befestigungselements (11) im Gehäuse (12) angeordnet ist, die einen tellerfederartigen Ansatz (22) zur Abstützung am Boden (23) des Gehäuses (12) aufweist, wobei der tellerfederartige Ansatz (22) ein Mittel zur gleichmäßigen Verteilung der von dem Befestigungselement zur Befestigung an der feststehenden Struktur hervorgerufenen Verspannkraft bildet.

2. Antrieb nach Anspruch 1, **dadurch gekennzeichnet, dass** das Gehäuse aus einem schalenförmigen Untergehäuse (1) und einem deckelartigen Obergehäuse (2) besteht, das eine Öffnung für den Durchgriff der Hülse aufweist.

3. Antrieb nach Anspruch 1 oder Anspruch 2, **dadurch gekennzeichnet, dass** am Boden (23) eine ins innere des Gehäuses (12) weisende Erhöhung (24) angeformt ist, die von dem tellerfederartigen Ansatz übergriffen wird.

4. Antrieb nach einem der Ansprüche 1 bis 3, **dadurch gekennzeichnet, dass** mindestens ein am Obergehäuse (2) angeformter Ansatz (25) einen Anschlag zum Niederhalten des tellerfederartigen Ansatzes (22) bildet.

5. Antrieb nach einem der Ansprüche 1 bis 4, **dadurch gekennzeichnet, dass** das Gehäuse (12) im Bereich des Bodens (23) mindestens drei Auflageansätze (9) als Abstützpunkte an der feststehenden Struktur aufweist.

6. Antrieb nach einem der Ansprüche 1 bis 5, **dadurch gekennzeichnet, dass** um die Hülse (8) herum Mittel zur elastischen Vorspannung zwischen Gehäuse (12) und umgreifendem Element (3) vorgesehen sind, die ein um die Hülse (8) herum angeordnetes Ausgleichselement (6) aufweisen, wobei das Ausgleichselement (6) unter der Wirkung einer Federkraft axial zur Ausübung eines Drucks auf den Träger (4) und damit auf das das Gehäuse (12) umgreifende Element (3) bewegbar ist.

7. Antrieb nach einem der Ansprüche 1 bis 6, **dadurch gekennzeichnet, dass** zwischen Ausgleichselement (6) und Gehäuse (12) mindestens eine axial zur Mittelachse des Gehäuses wirkende Feder angeordnet ist.

8. Antrieb nach einem der Ansprüche 6 bis 7, **dadurch gekennzeichnet, dass** mindestens zwei Federn (7), vorzugsweise Spiralfedern, symmetrisch zur Mittelachse (14) vorgesehen sind, wobei vorzugsweise an dem Ausgleichselement (6) Stifte (17) für die Zentrierung der Federn (7) angeordnet sind.

9. Antrieb nach einem der Ansprüche 1 bis 8, **dadurch gekennzeichnet, dass** zwischen Gehäuse (12) und Träger (4) eine Doppelzylinder-Lageranordnung (5) angeordnet ist, deren Lagerelemente (6, 29, 28) Öffnungen für den Durchgriff der Hülse (8) aufweisen.

10. Antrieb nach Anspruch 9, **dadurch gekennzeichnet, dass** das Ausgleichselement (6) ein Lagerelement bildet und eine Führung (26), vorzugsweise eine Prismaführung aus zwei prismaähnlichen Flächen oder eine gekrümmte Fläche, vorzugsweise eine Teilzylinderfläche aufweist.

11. Antrieb nach Anspruch 9 oder 10, **dadurch gekennzeichnet, dass** der Träger (4) als Trägerplatte, vorzugsweise zur Befestigung eines Spiegels ausgebildet ist und dass an die Trägerplatte mittig ein Teilzylinder (28) als Lagerelement angeformt ist.

12. Antrieb nach Anspruch 10 und Anspruch 11, **dadurch gekennzeichnet, dass** zwischen Teilzylinder (28) der Trägerplatte (4) und Ausgleichselement (6) ein Zwischenlagerelement (20) angeordnet ist, das eine dem Teilzylinder (28) zugewandte Führung (27) aus prismaähnlichen Flächen oder gekrümmten Lagerflächen und eine dem Ausgleichselement (6) zugewandte teilzylinderförmige Gleitfläche (29) aufweist.

## Claims

1. Drive for a component to be adjusted, in particular for an adjustable automotive vehicle mirror, having a housing (12) which can be mounted on a stationary structure (10) and has a central axis for receiving drive elements, and having an element (3) which (12) encompasses the housing at least partially and is connected to a carrier (4) for the component, the encompassing element (3) with the carrier (4) being disposed pivotably relative to the housing (12), ***characterised in that**,*
about the central axis (14), a pin-like sleeve (8) for guiding through a mounting element (11) is disposed in the housing (12) and has a plate spring-like projection (22) for support on the base (23) of the housing (12), the plate spring-like projection (22) forming a means for uniform distribution of the tension force caused by the mounting element for mounting on the stationary structure.

2. Device according to claim 1, **characterised in that** the housing consists of a shell-shaped lower housing (1) and a cover-like upper housing (2) which has an opening for the passage of the sleeve.

3. Drive according to claim 1 or claim 2, **characterised in that** a raised portion (24) which points into the interior of the housing (12) is moulded on the base (23) and is covered by the plate spring-like projection.

4. Drive according to one of the claims 1 to 3, **characterised in that** at least one projection (25) moulded on the upper housing (2) forms a limit stop for holding down the plate spring-like projection (22).

5. Drive according to one of the claims 1 to 4, **characterised in that** the housing (12) has at least three support projections (9) as support points on the stationary structure in the region of the base (23).

6. Drive according to one of the claims 1 to 5, **characterised in that** means are provided around the sleeve (8) for elastic pretension between the housing (12) and the encompassing element (3) and have a compensating element (6) disposed around the sleeve (8), the compensating element (6) being moveable axially under the effect of a spring force in order to exert a pressure on the carrier (4) and hence on the element (3) encompassing the housing (12).

7. Drive according to one of the claims 1 to 6, **characterised in that** at least one spring which acts axially relative to the central axis of the housing is disposed between the compensating element (6) and the housing (12).

8. Drive according to one of the claims 6 to 7, **characterised in that** at least two springs (7), preferably spiral springs, are provided symmetrically to the central axis (14), pins (17) for centring the springs (7) being disposed preferably on the compensating element (6).

9. Drive according to one of the claims 1 to 8, **characterised in that** a double cylinder bearing arrangement (5) is disposed between housing (12) and carrier (4), the bearing elements (6, 29, 28) of which have openings for passage of the sleeve (8).

10. Drive according to claim 9, **characterised in that** the compensating element (6) forms a bearing element and has a guide (26), preferably a V-guide comprising two prism-like faces or a curved face, preferably a partial cylinder face.

11. Drive according to claim 9 or 10, **characterised in that** the carrier (4) is configured as a carrier plate, preferably for mounting a mirror and **in that** a partial cylinder (28) as bearing element is moulded centrally on the carrier plate.

12. Drive according to claim 10 and claim 11, **characterised in that** an intermediate bearing element (20) is disposed between the partial cylinder (28) of the carrier plate (4) and the compensating element (6), which intermediate bearing element has a guide (27), which is orientated towards the partial cylinder (28) and comprises prism-like faces or curved bearing faces, and a partial cylindrical sliding face (29) orientated towards the compensating element (6).

## Revendications

1. Système d'entraînement pour une pièce à ajuster, en particulier pour un rétroviseur réglable, comportant un boîtier (12) avec un axe médian, qui est propre à être fixé à une structure (10) fixe et est destiné à recevoir des éléments d'entraînement, et comportant un élément (3) qui enveloppe au moins en partie le boîtier (12) et qui est relié à un support (4) de la pièce, l'élément (3) enveloppant au moins en partie le boîtier (12) étant disposé de manière pivotante avec le support (4) par rapport au boîtier (12),
**caractérisé en ce qu'**un manchon (8) du type goupille est disposé autour de l'axe médian (14) pour le passage d'un élément de fixation (11) dans le boîtier (12), lequel comporte une saillie (22) de type ressort à disques destinée à être mise en appui sur le fond (23) du boîtier (12), ladite saillie (22) de type ressort à disques formant un moyen pour la répartition uniforme de la force de serrage induite par l'élément de fixation pour la fixation sur la structure fixe.

2. Système d'entraînement selon la revendication 1, **caractérisé en ce que** le boîtier est formé par un boîtier inférieur (1) en forme de coque et un boîtier supérieur (2) en forme de couvercle, qui comporte une ouverture pour le passage du manchon.

3. Système d'entraînement selon la revendication 1 ou la revendication 2, **caractérisé en ce que** le fond (23) est formé par un rehaussement (24), qui est orienté vers l'intérieur du boîtier (12) et au-dessus duquel s'engage la saillie de type ressort à disques.

4. Système d'entraînement selon l'une quelconque des revendications 1 à 3, **caractérisé en ce qu'**au moins une saillie (25), formée sur le boîtier supérieur (2), forme une butée par laquelle la saillie (22) de type ressort à disques est maintenue en bas.

5. Système d'entraînement selon l'une quelconque des revendications 1 à 4, **caractérisé en ce que** le boîtier (12), dans la zone du fond (23), comporte au moins trois saillies d'appui (9) formant des points d'appui sur la structure fixe.

6. Système d'entraînement selon l'une quelconque des revendications 1 à 5, **caractérisé en ce que**, tout autour du manchon (8), il est prévu des moyens pour la précontrainte élastique entre le boîtier (12) et l'élément (3) enveloppant au moins en partie le boîtier (12), lesquels comportent un élément de compensation (6) agencé autour du manchon (8), ledit élément de compensation (6) étant mobile axialement sous l'effet de la force d'un ressort pour exercer une pression sur le support (4) et donc sur l'élément (3) enveloppant le boîtier (12).

7. Système d'entraînement selon l'une quelconque des revendications 1 à 6, **caractérisé en ce qu'**au moins un ressort, agissant axialement par rapport à l'axe médian du boîtier, est disposé entre l'élément de compensation (6) et le boîtier (12).

8. Système d'entraînement selon l'une quelconque des revendications 6 à 7, **caractérisé en ce qu'**au moins deux ressorts (7), de préférence des ressorts à spirales, sont disposés symétriquement à l'axe médian (14), et que de préférence des goupilles (17) pour le centrage des ressorts (7) sont disposées sur l'élément de compensation (6).

9. Système d'entraînement selon l'une quelconque des revendications 1 à 8, **caractérisé en ce qu'**entre le boîtier (12) et le support (4) est disposé un système de palier à double cylindre (5), dont les éléments de palier (6, 29, 28) comportent des ouvertures pour le passage du manchon (8).

10. Système d'entraînement selon la revendication 9, **caractérisé en ce que** l'élément de compensation (6) forme un élément de palier, et comporte un guidage (26), de préférence un prisme de guidage formé de deux surfaces prismatiques ou d'une surface courbe, de préférence une surface partiellement cylindrique.

11. Système d'entraînement selon la revendication 9 ou 10, **caractérisé en ce que** le support (4) est réalisé sous la forme d'une plaque support, de préférence pour la fixation d'un rétroviseur, et **en ce qu'**au milieu de la plaque support est formé un cylindre partiel (28) constituant un élément de palier.

12. Système d'entraînement selon la revendication 10 et la revendication 11, **caractérisé en ce qu'**entre le cylindre partiel (28) de la plaque support (4) et l'élément de compensation (6) est disposé un élément de palier intermédiaire (20), qui comporte un
guidage (27) orienté vers le cylindrique partiel (28) et muni de surfaces prismatiques ou de surfaces d'appui courbes et d'une surface de glissement (29) en forme de cylindrique partiel, orientée vers l'élément de compensation (6).
